# EUROPEAN PATENT APPLICATION

(11) **EP 1 505 809 A2**
(43) Date of publication of application: **09.02.2005**
(21) Application number: 04001192.6
(22) Date of filing: 21.01.2004
(51) Int. Cl.: H04M 1/725

(54) **Multi-purpose hybrid terminal and method for preparing fast implementation of functions**

(30) Priority: 04.08.2003 KR 2003053797
(71) Applicant: Samsung Electronics Co., Ltd., Suwon-si, Gyeonggi-do (KR)
(72) Inventor: Jei, Dae-Gunn, Samsung Electronics Co., Ltd., Suwon-si, Gyeonggi-do (KR)
(74) Representative: Lang, Johannes, Dipl.-Ing.

(57) **Abstract**

A multi-purpose hybrid terminal having secondary additional functions, such as Personal Digital Assistant, game and TV reception, in addition to a primary voice communication function. If the user presets one or more conditions such as time or place, to the implementation of an additional function while the terminal remains continuous within the phone mode, the terminal keeps monitoring whether the conditions have been met. When the condition is determined to have been met, the terminal automatically implements the additional function, even without the user's additional demand. Alternatively, the terminal informs the user of the completion of the preparation of the additional function by an appropriate method, thereby enabling the user to conveniently use the function, without much time delay, at a subsequent time of the user's choice.

## Description

This application makes reference to, incorporates the same herein, and claims all benefits accruing under 35 U.S.C. §119 from an application for *MULTI-PURPOSE HYBRID TERMINAL AND METHOD FOR PREPARING FAST IMPLEMENTATION OF FUNCTIONS* earlier filed in the Korean Intellectual Property Office on 4 August 2003 and there duly assigned Serial No. 2003-53797.

### BACKGROUND OF THE INVENTION

### Field of the Invention

The present invention relates to a multi-purpose hybrid terminal, and more particularly, to a multi-purpose hybrid terminal and a method for preparing fast implementation of functions.

### Description of the Related Art

Generally, a mobile terminal can be preset to implement a particular function under conditions desired by the user. When a condition is met, the mobile terminal implements the preset function. For example, if the user sets an alarm time (that is, a condition), the mobile terminal will sound an audible alarm (that is, the function) at the fixed time. In other words, the user presets a minute and an hour as a condition precedent, and when that condition is met, the function is performed by the mobile terminal.

In a mobile terminal primarily for voice communication, an additional function, such as alarm, is implemented only upon input of the user's demand. Therefore, the mobile terminal does not offer enough convenience to the user who wishes to implement such an additional function.

Japanese Unexamined Patent Publication No. 2002-108685, entitled *Game Contents Acquisition System for Mobile Telephone Set,* mentions a technique for a game contents acquisition system in a mobile telephone overcoming problems associated with the slow transfer of image data files, which are substantially greater in size than are text files, to a mobile device such as a mobile telephone through a telecommunication line.

The Japanese reference, however, does not explain how to read out the game data stored in the mobile telephone.

The Nokia N-Gage™ is a hybrid mobile terminal for Global System for Mobile/General Packet Radio Service with a gaming device's function integrated. When the game function is selected, the game phone is changed to a game mode from a phone mode, but only after the user has repeatedly manipulated the keypad of the mobile terminal many times, while faithfully watching the display of the terminal.

I have discovered that the contemporary processes for the initiation and implementation of ancillary and peripheral functions are neither especially suitable, nor particularly convenient for ease of use, in hybrid mobile terminals where the primary function of the terminal is mobility. Moreover, the Mobile Game Interoperability Forum, the MGIF, http://www.openmobilealliance.org/mgif/) emphasizes that game phone users tend to demand fast accessibility to any functions or services because of the mobile environment and the limited power supply. Furthermore, most users carry their mobile terminals all the time and quite regularly use particular functions. Therefore, I have found it necessary to develop hybrid mobile terminals that promptly meet the users' demand for such functions. In other words, I have discovered a need for a method to enable a user to obtain prompt access to a desired function.

### SUMMARY OF THE INVENTION

Accordingly, the present invention has been made to solve the above-mentioned problems occurring in the art. It is therefore, an object of the present invention to provide a multi-purpose hybrid terminal and a process for preparing during one mode, a function to be performed in another mode and informing a user of the completion of the preparation, thereby enabling the user to conveniently use the function, without much time delay.

It is another object to provide a multi-purpose hybrid terminal and process enabling a user to prepare, during the pendency of one operational mode, a function to be performed during a different operational mode.

It is still another object to provide a multi-purpose hybrid terminal and process that, during the pendency of one mode, informs the user of the operational availability of a function to be performed during a different operational mode.

It is yet another object to provide a multi-purpose hybrid terminal and process that enables a user to select a function to be performed during one operational mode, while a different operational mode is in current operational use.

It is still yet another object to provide a multi-purpose hybrid terminal and process that informs a user during the pendency of one operational mode that the loading of a function selected by the user has been completed and that the function is available to be performed during a different operational mode.

It is also an object to provide a multi-purpose hybrid terminal and process that without interruption of a current operational mode, responds to a user's instruction by completing the operational availability of a function usable during a different operational mode.

It is a further object to provide a multi-purpose hybrid terminal and process that without interruption of a current operational mode, responds to a user's instruction by initiating the preparation of a function selected by the user and usable during a different operational mode, and signaling the completion of the preparation by indicating the operational availability of a function.

In order to accomplish the above object, there is provided a multi-purpose hybrid terminal having more than one operational mode. A user's demand for access to various functions can be applied to the terminal in advance. The terminal continuously monitors whether a condition satisfying the user's demand has been met. In such a condition, the terminal automatically writes a corresponding program in a memory. After additional selections by the user, the terminal informs the user of its completion of the preparation and of the immediate availability to the user of the selected function.

Also, in order for the user to conveniently use additional functions of the multi-purpose hybrid terminal, a condition for implementing a desired function, such as time or place, may be entered in the terminal by the user, such as with a key input by the user. The terminal determines whether the condition has been met by using a timer or, alternatively, a location tracking system. When the condition is determined to have been met, the terminal automatically implements the desired function, even without the user's additional demand. Alternatively, the terminal may inform the user about the establishment of a standby mode for implementing the function and then delay any change in its operational mode to implement the function in accordance with the user's selection.

### BRIEF DESCRIPTION OF THE DRAWINGS

A more complete appreciation of the invention, and many of the attendant advantages thereof, will be readily apparent as the same becomes better understood by reference to the following detailed description when considered in conjunction with the accompanying drawings in which like reference symbols indicate the same or similar components, wherein:
- FIG. 1: is a diagrammatic illustration of a game contents acquisition system for a mobile telephone.
- FIG. 2: is an oblique perspective illustration of a Nokia N-Gage™ game phone.
- FIG. 3: shows a sequence of messages that are serially displayed on a hybrid mobile terminal until a selected game is started after a change in mode from phone to gaming device.
- FIG. 4: is a flow chart showing the several processes that are performed before an additional function is implemented on a conventional hybrid mobile terminal by a change in operational mode from phone to gaming device.
- FIG. 5: is a schematic block diagram of a hybrid mobile terminal having a game function according to a first embodiment of the present invention.
- FIG. 6: is a schematic block diagram of a hybrid mobile terminal having a game function according to a second embodiment of the present invention.
- FIG. 7: is a flow chart showing a process for preparing fast implementation of a function in a multi-purpose hybrid terminal according to the principles of the present invention.

- FIG. 8: shows a sequence of messages that may be serially displayed on a hybrid mobile terminal according to the principles of the present invention to inform the user about the completion of the preparation for an additional function.

### DETAILED DESCRIPTION OF THE PREFERRED EMBODIMENT

Hereinafter, preferred embodiments of the present invention will be described with reference to the accompanying drawings. In the drawings, the same element, although possibly depicted in different drawings, may be designated by the same reference numeral or character. Although certain functions, such as a name of a game, are specifically defined in the following description of the present invention, it will become apparent to those skilled in the art that such definitions of functions are presented merely to improve the reader's understanding of the present invention, and that the present invention can be carried out without such specific elements. Also, in the following description of the present invention, a detailed description of known functions and configurations incorporated herein will be omitted when it may tend to obscure the subject matter of the present invention.

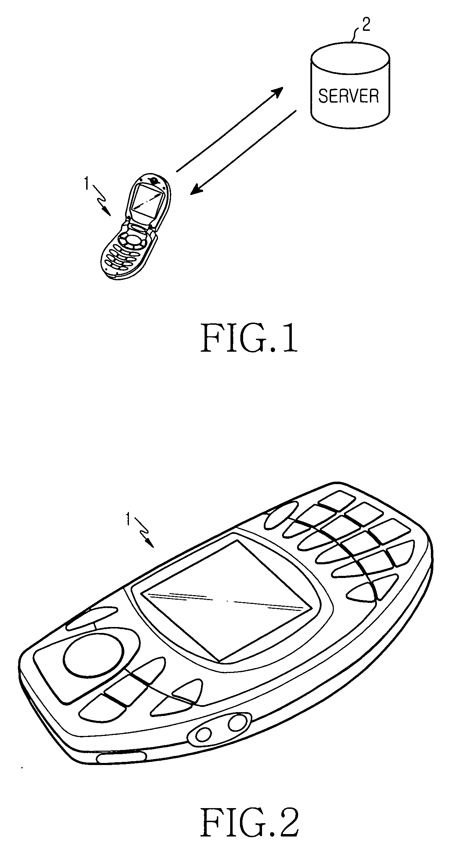

FIG. 1 is a schematic view of a game contents acquisition system for a mobile telephone as disclosed in Japanese Unexamined Patent Publication No. 2002-108685.

In the system of FIG. 1, mobile telephone 1 downloads game contents as files from server 1 and stores the files in a cache memory. Mobile telephone 1 outputs the files to its display section in the order they were stored, thereby featuring animation. If such files have been stored in the cache memory in advance however, instead of being downloaded from the server later as needed, the user will not have to wait as long for the output of the stored files to the display section.

One technique contemporary to the art is to receive game data from a mobile game service provider, such as server 2, and to store the data in the cache memory in advance for fast access to the game. In other words, the game data is received in advance by a fixed method of the system and wirelessly downloaded, without any input of the user's demand. The Japanese '685 reference, however, fails to teach how to read out or load the game data stored in the mobile telephone.

FIG. 2 is an oblique perspective view of a Nokia N-Gage™ game deck phone.

This game deck phone is a hybrid mobile terminal that uses the GSM/GPRS (that is, Global System for Mobile/General Packet Radio Service) with a gaming device function integrated into the terminal. When the game function is selected, the game phone is switched from a game mode to a phone mode. Also, game contents stored in a multimedia memory card within the terminal are read out to a main flash memory of the terminal. A script-based game program embedded in a general mobile terminal is stored as a small file in an internal memory of the terminal. Such a small file game program can be implemented after fast memory loading. Memory loading and game mode setting however, take too long to implement a data-rich game program which has a large file size.

If a user wishes to use an additional function (e.g., a game) on a hybrid mobile terminal such as a game phone, the user must first press the keys of the keypad numerous times, while simultaneously continuously watching the display of the terminal.

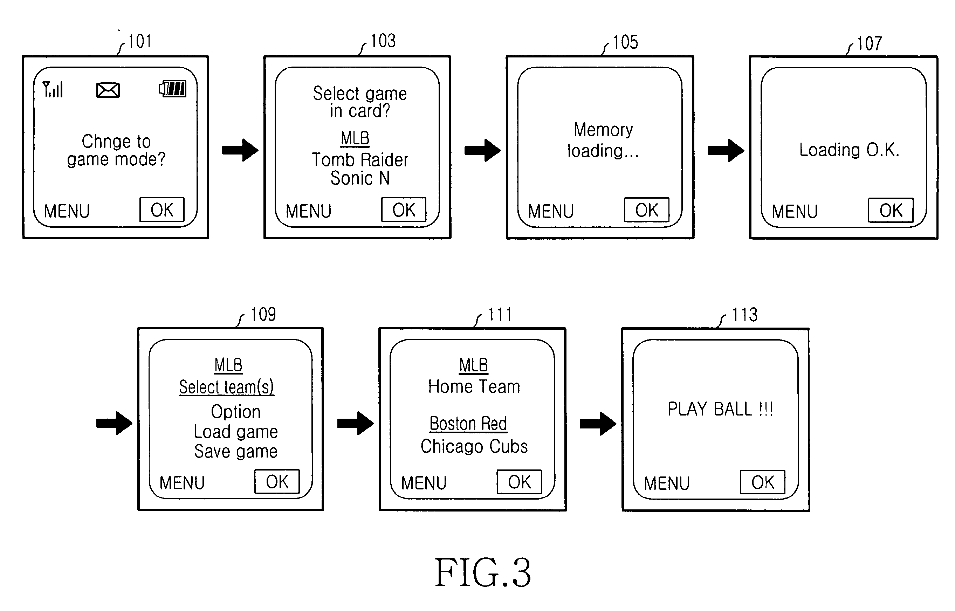

FIG. 3 shows an array of exemplary display screens bearing messages that could sequentially be displayed on mobile terminal 1 until a selected game is started after a change in mode from phone to gaming device.

The mobile terminal confirms with screen 101 whether the user wishes to change the current mode from a phone mode to an additional function mode such as a game mode with screen 103. The mobile terminal allows the user to select a game stored in the memory card by pressing additional keys.

Screens 105 and 107 show messages that are sequentially displayed while a game is being read out and written into the memory. The memory loading process screen 105 and the completion of memory loading subsequently indicated by the message appearing on screen 107.

Subsequently, as is indicated by screen 109, the user can select additional options for the game. For example, the user can select a team or any other option for a baseball game. The selected options are displayed on screen 111. The user can then start the game with selected options shown on screen 113.

If a function need be repeatedly implemented whenever a particular condition is met, the user may feel inconvenienced because of the need to repeatedly press the keys in order to completely set-up the game function sought by the user, with the processes shown in FIG. 3, and by the subsequent wait until the memory completely reads out the data for the selected game function.

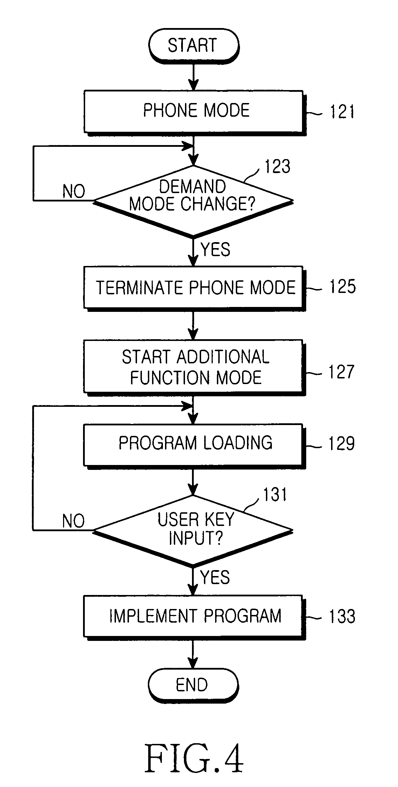

FIG. 4 is a flow chart showing the several processes that must be implemented by a mobile terminal in order to switch from the telephone mode in step 121 to a game mode, and to thereby convert a mobile terminal from a phone to gaming device.

When turned on, the mobile terminal is initially set in the phone mode at step 121. At step 123, the mobile terminal confirms whether the user has input a demand for a mode change. If the user has input such a demand, the mobile terminal will terminate its phone mode at step 125 and will enter into the additional function mode that has been selected by the user at step 127. At step 129, a corresponding program is loaded. At step 131, the mobile terminal determines whether the user has made a key input. Upon detection of such a key input, the mobile terminal will implement the program at step 133. At step 123, a message as shown in screen 101 of FIG. 3, can be displayed. At step 129, messages as shown in screens 105 and 107 of FIG. 3 can be displayed. Also, in step 133, messages as shown in screens 109 and screen 111 of FIG. 3 can be displayed.

These foregoing processes are not particularly amenable to execution in a hybrid terminal having an important feature in mobility. The Mobile Game Interoperability Forum, (often referred to as MGIF, http://www.openmobilealliance.org/mgif/) emphasizes that game phone users tend to demand especially fast accessibility to any functions or services because of the mobile environment and the limited capacity of the power supply of the mobile terminal. Most users carry their mobile terminal at all times and quite regularly use particular functions. Therefore, I have found that it would be necessary to develop hybrid mobile terminals that promptly meet the users' demand for the initiation as well as the implementation of such functions. In other words, I have discovered a need for a method for enabling a prompt access to a desired function.

The present invention is applicable to a hybrid terminal having secondary functions, such as a Personal Digital Assistant often referred to as a "PDA", game and TV, in addition to a primary voice communication function.

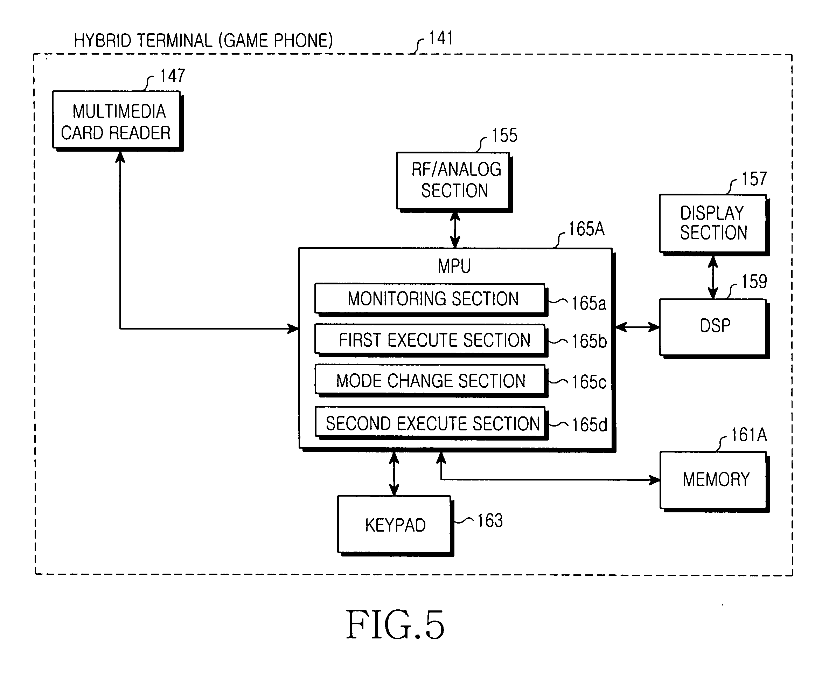

FIG. 5 is a schematic block diagram of a hybrid terminal having a game function in accordance with a first embodiment of the present invention. The terminal can be a game phone.

Referring again to FIG. 5, a game phone 141 may be constructed with both elements for voice communication and those for games.

An RF/analog section 155 performs wireless transmission and reception, and processes baseband signals. A digital signal processor ("DSP") 159 encodes and compresses speech. In a keypad 163 bearing a plurality of alphanumeric keys, selection keys and functional keys displayed to easy manipulation by a user, is provided to enable user interface with telephone 141; the keys are mapped according to the operation modes of the terminal. A display section 157 provides a variable visual representation of the operation states of the mobile terminal. The displayed states vary, depending on the modes of the terminal. Under the control of a communication microprocessor MPU 165, display section 157 can be used as an alarm to advise the user about the completion of at least one task for implementing a function. A memory 161 may be constructed with a read only memory (ROM) for storing programs for implementing various functions with related data and a random access memory (RAM) for temporary storage of data.

Communication microprocessor MPU 165A includes a monitoring section 165a that monitors a condition representative of the progress of the terminal toward satisfaction of the user's demand for activation of an additional function while the terminal remains continuously in the phone mode, a first execute section 165b for performing at least one task to use the additional function when the condition is determined to have been met, a mode changing section 165c for changing the operational mode of the terminal from phone to the additional function, and a second execute section 165d for implementing the additional function such as a game selected by the user.

A multimedia card reader 147 is a peripheral device that is able to read a removable multimedia card that stores a game program (for example, an MultiMedia Card (MMC), a (Compact Flash (CF) or a Secure Digital (SD) card) that is not separately shown, in order to read and enable terminal 141 to write into memory 161 and to implement an additional function such as an algorithm for a video game. If the hybrid terminal is a TV phone or radio frequency identifier (i.e., RFID) tagged phone, another peripheral, such as a TV receiver or an RFID tag, should be provided. A basic RFID system is constructed with three components, an antenna or coil, a transceiver (with decoder), and a transponder (RF tag) electronically programmed with unique information. The antenna emits radio signals to activate the tag and read and write data to it. Antennas are the conduits between the tag and the transceiver, which controls the system's data acquisition and communication. The electromagnetic field produced by an antenna can be constantly present when multiple tags are expected continually. If constant interrogation is not required, the field can be activated by a sensor device.

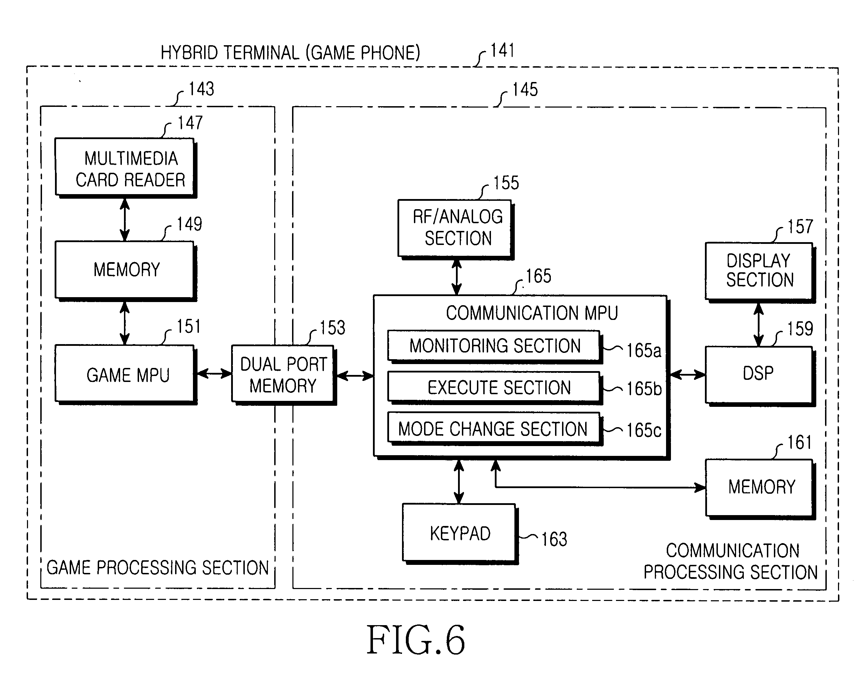

FIG. 6 is a schematic block diagram of a hybrid mobile terminal having a game function in accordance with a second embodiment of the present invention. The hybrid terminal can be a game phone.

Unlike the terminal of FIG. 5, game phone 141 of FIG. 6 may be constructed with a first processing section 145 (for example, a communication processor), a second processing section 143 (for example, a game processor) and a dual port memory for data exchange between the two processing sections 143, 145.

The communication processor 145 includes a communication microprocessor MPU 165, an RF/analog section 155, a digital signal processor DSP 159, a keypad 163, a display section 157 and a memory 161.

Communication microprocessor 165 incorporated into communication processor 165 includes a monitoring section 165a that monitors a condition representative of the progress of the terminal toward satisfaction of the user's demand for activation and implementation of an additional function while telephone 141 is being continuously held in the communication mode, an execute section 165b for performing at least one task to use the additional function selected when the condition has been met, and a mode changing section 165c for changing the operational mode from phone to the operational mode corresponding to the user's selection of that additional function. Execute section 165b is identical to first execute section 165b in FIG. 5.

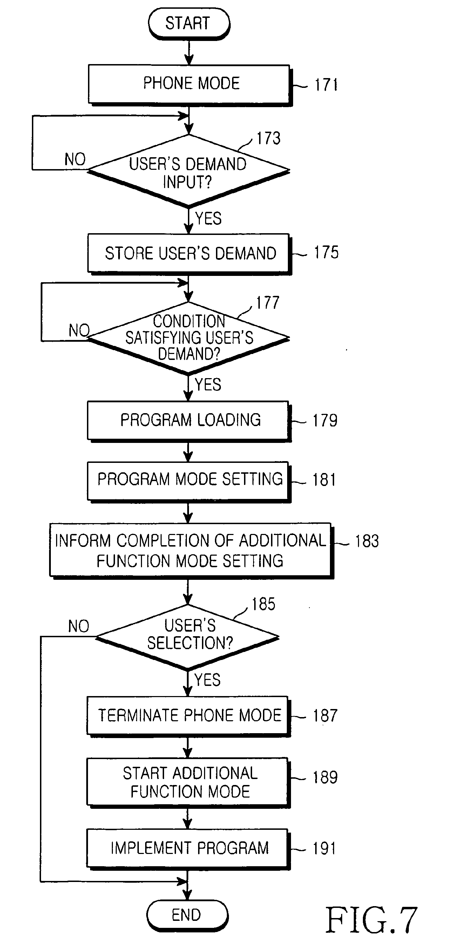

Communication microprocessor MPU 165 performs at least one task for using the additional function solely, or alternatively together with a game microprocessor MPU 151 incorporated into game processing section 143. When the precedent condition to satisfaction of the user's demand has been met, the mobile terminal informs the user that a determination has been made that the condition has been met, so that the user can select a mode change in step 185 in FIG. 7 to implement the additional function. Although not shown in the drawings, in an alternative configuration, terminal 141 can also be configured for implementing an automatic change of mode, even without the user's selection of a mode change, whenever the user selects a function during the course of one operational mode that is to be executed during a different operational mode. When the user inputs a demand for implementing an additional function in step 173, mobile terminal 141 can be set to automatically change its operational mode later, when the fixed condition is met. Alternatively, the terminal can be programmed to automatically change the mode by default, regardless of the user's selection; that is, step 185 in FIG. 7 can be skipped.

Game processor 143 includes a Main Processor Unit, for example, 104MHz ARM925 MPU 151 from Texas Instruments, Inc., which is a main arithmetic unit for controlling a game function, memory 149 for storing data according to the game algorithm, and multimedia card reader 147.

Part, or all, of the functional elements of communication microprocessor MPU 165, for example, monitoring section 165a, execute section 165b and mode changing section 165c, may be included in the game MPU 151.

FIG. 7 is a flow chart showing the several possible steps for completing a process of preparing fast implementation of a function in a multi-purpose hybrid terminal according to the present invention.

When turned on, terminal 141 may initially be set in the phone mode at step 171. At step 173, terminal 141 detects whether a demand has been input by a user for implementing a function. The user can input the demand by various methods, such as with a series of key inputs through manual manipulation of one, or more, of the several keys borne by keypad 163, in response to the visual and textural prompts provided by the visual images projected by display section 157, with, for example, screen 101 or 103, as shown in FIG. 3.

If an input of the user's demand is detected, mobile terminal 141 will store the demand in memory 161, 161A at step 175. At step 177, mobile terminal 141, while remaining in the phone mode, determines whether a condition satisfying the user's demand has been met. For example, if the condition is a fixed time, the terminal will monitor the condition by checking a timer. If the condition relates to a place, the terminal will obtain its positional data using a GPS receiver, an RFID (Radio Frequency Identification) reader that is, either an interrogator or a tag such as a transducer, not separately shown in FIG. 5 or 6, and the communication microprocessor MPU 165. Also, the terminal will determine whether the positional data coincide with the condition satisfying the user's demand; that is, in step 177, terminal 141 makes a determination of whether the positional data received from such external sources such as a global positioning receiver (*i.e.*, a GPS receiver) or a radio frequency identification indicator or tag (*i.e.,* a RFID tag) either coincide with, or fall within a range, established by the condition corresponding to the user's demand. Alternatively, such external sources such as a global positioning receiver or a radio frequency identification indicator or tag may be incorporated into the terminal. Various conditions, such as a time, a place, or a geographical or physical location, or a combination thereof, can be set as a condition precedent.

When step 177 determines that the condition precedent corresponding to the user's demand input in step 173 has been satisfied, the terminal sends a command to load the game file to game microprocessor MPU 151 at step 179. At step 181, the terminal commands preparation for the implementation of a game, such as input/output control and the game mode setting. To be specific, a pertinent command is sent to the game MPU 151 through a General Port for Input/Output (*i.e.*, a GPIO) of communication microprocessor MPU 165.

Upon completion of the tasks performed by game microprocessor MPU 151, at step 183 terminal 141 informs the user about the completion of game mode setting. In this regard, various methods, such as illumination of a light emitting diode, a bell sound or vibration, can be used. Alternatively, part of display section 157 which is in the phone mode can be changed to the game mode.

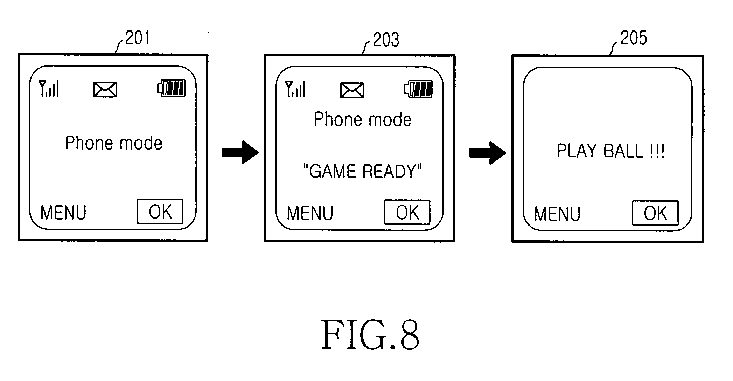

FIG. 8 shows messages sequentially displayed on display section 157 of a hybrid terminal 141 according to the present invention, to inform the user of the completion of preparation and the operational readiness of an additional function, pursuant to step 183.

Referring to FIG. 8, screens 201 and 203 show display section 175 in the phone mode of terminal 141. Display section 175 in the phone mode with screen 203 displays a message with the text "GAME READY" appears on screen 203 to inform the user of the game mode setting *(i.e.,* loading of the algorithm for execution of the selected game) in progress to load and activate the game. Display section 175 lastly displays a message on screen 205 with the text "PLAY BALL! ! !", to inform the user of the completion of the game mode setting, thereby indicating to the user that the selected game is operationally available for the enjoyment of the user.

Referring back to FIG. 7, the user who has been informed of the completion of the additional functional mode setting can select immediate implementation of the additional function selected by the user in step 173. At step 185, the terminal checks the user's selection and may determine whether the user has indicated a preference for immediate implementation of the selected function. If the determination establishes that the user has not selected immediate implementation of the additional function, the terminal will maintain the phone mode without interruption. Otherwise, terminal 141 will terminate the phone mode at step 187 and will enter the additional function mode at step 189. At step 191, the terminal executes the application program corresponding to the function indicated by the user's demand.

When the user inputs a demand for implementing an additional function and a condition therefor in step 173, mobile terminal 141 can be set to automatically change its operational mode to the additional function mode upon completion of the preparation for implementing the selected function, without the user's selection of the mode change. If so, step 185 will be skipped to accommodate for the automatic mode change. Alternatively, the terminal can be programmed to skip step 185 in order to automatically change the mode by default, regardless of the user's selection and preference.

As described above, the multi-purpose hybrid terminal constructed according to the present invention can prepare in one mode, that is, during the current mode, a function to be performed during another mode, and inform the user of the completion of the preparation, thereby enabling the user to conveniently use a desired function, without significant delay of time, and without interrupting the operational availability of the current mode.

If a user of a game phone wishes to regularly implement a game program at a fixed time for example, at rush hour, the user should, in advance, store the condition for implementing the game program. The game phone keeps monitoring its state to determine whether the condition for satisfying the user's demand has been met. Also, the game phone performs a series of tasks in order to expedite the user's fast access to the game.

If a user of a TV phone wishes to watch a news program broadcasted at a fixed time in a particular region, that is, within a fixed place, in consideration of the regional characteristic of TV broadcasting and inputs the fixed time and geographic or fixed location corresponding to the user's designation of a region or place as one or more conditions precedent to display of the program, the TV phone will perform a series of tasks requiring key manipulation, such as image quality adjustment and selection of a channel on which the news program is broadcasted. The TV phone will inform the user when the preparation for implementing the TV function is completed so that the user can promptly watch the desired news program at the time selected by the user, without much delay of time.

The present invention is also applicable to a hybrid terminal with an RFID tag and an automobile with an RFID reader. When a user having an RFID tagged terminal takes a car, an RFID reader mounted in the car reads the RFID tag of the terminal and commands the RFID tag to perform one or more preset functions. The RFID then transfer the command to the terminal to perform the function. For example, one preset function can be "a change to hands-free mode." The RFID reader senses when the user drives the car. The RFID commands the terminal to change in mode from a normal mode to a hands-free mode through the detection of the RFID tag. Accordingly, the terminal changes its mode to the hands-free mode and informs the user about the change of operational mode according to the present invention.

Although preferred embodiments of the present invention have been described for illustrative purposes, those skilled in the art will appreciate that various modifications, additions and substitutions are possible, without departing from the scope and spirit of the invention as disclosed in the accompanying claims, including the full scope of equivalents thereof.

## Claims

1. A multi-purpose hybrid terminal, comprising:
an input section for receiving a user's demand to implement an additional function while the hybrid terminal remains in a phone mode accommodating performance of a communication function;
a memory for storing the user's demand;
a monitoring section for monitoring whether a condition that satisfies the user's demand is met while the terminal remains in the phone mode corresponding to said communication function;
a execute section for performing at least one task for implementing the additional function when a satisfaction of the condition satisfying the user's demand is detected by the monitoring; and
a mode change section for changing the phone mode to a different mode corresponding to the additional function mode.

2. The multi-purpose hybrid terminal according to claim 1, further comprising an alarm for informing the user of the completion of said task.

3. The multi-purpose hybrid terminal according to claim 1, wherein said input section includes a key disposed to trigger a change from the phone mode to the additional function mode.

4. A multi-purpose hybrid terminal, comprising:
an input section for receiving a user's demand for implementing an additional function;
a memory for storing the inputted user's demand;
a monitoring section for monitoring whether a condition satisfying the user's demand is met during a phone mode that accommodates wireless communication via the terminal;
a execute section for performing at least one task for implementing the additional function when the condition has been met;
a mode change section for changing the phone mode to the additional function mode;
a first processor including an alarm section for informing the user of the completion of said task;
a second processor for processing the additional function; and
a dual port memory for exchanging data between the first processor and the second processor.

5. The multi-purpose hybrid terminal according to claim 4, wherein the addi tional function performed by said second processor is a game function that is operationally responsive to commands received by the terminal via the input section.

6. The multi-purpose hybrid terminal according to claim 5, wherein said second processor includes a main arithmetic unit for controlling a game function, a memory for storing data according to an algorithm executing the game function, and a multimedia card reader for reading a multimedia card.

7. The multi-purpose hybrid terminal according to claim 4, wherein the additional function performed by said second processor is a function of receiving a TV broadcast.

8. The multi-purpose hybrid terminal according to claim 4, wherein the additional function performed by said second processor is a detection of a location via a global position satellite.

9. The multi-purpose hybrid terminal according to claim 4, wherein the additional function performed by said second processor is a detection of a RFID indicator.

10. A multi-purpose hybrid terminal, comprising:
an input section for receiving a user's demand for implementing an additional function;
a memory for storing the inputted user's demand and data according to the additional function algorithm;
a monitoring section for monitoring whether a condition that satisfies the user's demand is met while the terminal continues within a phone mode accommodating wireless communication via the terminal;
a execute section for performing at least one task for implementing the additional function when the condition that satisfies the user's demand is detected by the monitoring;
a mode change section for shifting the terminal from the phone mode to the additional function mode;
an alarm section for informing the user of the completion of said task; and
a peripheral used for implementing the additional function.

11. The multi-purpose hybrid terminal according to claim 10, wherein said hybrid terminal is a game phone and said peripheral is a multimedia card reader for reading a multimedia card that stores a game program.

12. A multi-purpose hybrid terminal having a communication function and at least one additional function, comprising:
an input section for receiving a user's demand for implementing an additional function while the terminal remains in a phone mode accommodating wireless communication;
a memory for storing the user's demand:
a monitoring section for monitoring whether a condition that satisfies the user's demand is met during the phone mode;
a execute section for performing at least one task for implementing the additional function when the condition that satisfies the user's demand is detected by the monitoring;
an alarm section for informing the user of the completion of the task; and
a mode change section for shifting the terminal from the phone mode to the additional function mode.

13. A method for preparing fast task performance, comprising:
a first step of receiving and storing in a multipurpose hybrid terminal having a wireless communication function, a user's demand for implementing an additional function;
a second step of monitoring whether a condition that satisfies the user's demand is met during a phone mode that enables said communication function;
a third step of performing at least one task for implementing the additional function when the condition that satisfies the user's demand is met; and
a fourth step of informing the user of the completion of preparation for implementing the additional function upon completion of said task.

14. The method according to claim 13, further comprising a fifth step of changing the hybrid terminal to a different mode accommodating execution of the additional function.

15. The method according to claim 13, further comprising a step of determining whether the user has inputted a command for mode change before shifting the terminal from the phone mode to a different mode that enables execution of said additional function.

16. The method according to claim 14, comprising determining whether the user has requested a shift of the terminal from the phone mode to a different mode that enables said additional function.

17. A computer-readable medium bearing computer-executable instructions for performing a process, comprising:
storing in a hybrid terminal providing a phone mode supporting a communication function and a different mode supporting another function, a demand from a user for the hybrid terminal to implement the additional function;
while the hybrid terminal is in said phone mode, making a determination of whether a condition satisfying the user's demand has been satisfied;
during said phone mode and without interruption of said communication function, performing at least one task for implementing the additional function when said determination establishes that said condition has been satisfied; and
transmitting to the user an indication of a completion of said task.

18. The medium of claim 17, comprised of shifting from said phone mode to said different mode upon completion of said task.

19. The medium of claim 17, comprised of, during said phone mode performing said task by loading, without interrupting said communication function, a computer executable algorithm enabling implementation of the additional function.

20. The medium of claim 17, comprised of initially placing the terminal in a phone mode accommodating wireless communication via the terminal.

21. The medium of claim 17, comprised of:
after transmitting said indication, making a decision of whether the user has responded to said indication by entering into the hybrid terminal a selection corresponding to the additional function; and
shifting from said phone mode to said different mode upon entry of said selection.
